# EUROPEAN PATENT SPECIFICATION

(11) **EP 3 333 420 B1**
(45) Date of publication and mention of the grant of the patent: **22.12.2021**
(21) Application number: 17200663.7
(22) Date of filing: 08.11.2017
(51) Int. Cl.: F03G 7/06

(54) **RECONFIGURABLE STRUCTURE USING DUAL-MATRIX COMPOSITE MATERIAL**
REKONFIGURIERBARE STRUKTUR MITHILFE VON DUAL-MATRIX-VERBUNDSTOFFMATERIAL
STRUCTURE RECONFIGURABLE UTILISANT UN MATÉRIAU COMPOSITE À DOUBLE MATRICE

(30) Priority: 12.12.2016 KR 20160168684
(43) Date of publication of application: 13.06.2018
(73) Proprietor: Industry University Cooperation Foundation of Korea Aerospace University, Goyang-si, Gyeonggi-do 10540 (KR)
(72) Inventor: ROH, Jin Ho, 06276 Seoul (KR); BAE, Jae Sung, 02780 Seoul (KR); AHN, Min Su, 16628 Gyeonggi-do (KR)
(74) Representative: Zimmermann, Tankred Klaus

(56) References cited:
- CN-A- 101 922 591
- CN-B- 103 350 423
- US-A1- 2010 282 906

## Description

### BACKGROUND OF THE INVENTION

### Field of the Invention

Exemplary embodiments of the present invention relate to a reconfigurable structure using dual-matrix composite material, and more particularly, to a lightweight structure using dual-matrix composite material, capable of having a freely deformable shape even while rigidity of the structure is kept high, by applying an epoxy resin to a fixed portion on a carbon fiber and applying a shape memory polymer (SMP) resin to a deformable portion on the carbon fiber.

### Description of the Related Art

Recently, the weather environment has been rapidly changed all over the world, and the development of satellites having high performance is thus attempted to accurately and rapidly predict the climate on the earth. Specifically, a large number of extra-large space structures are studied to enhance the missions of satellites and maximize the performance thereof in advanced space development countries such as USA, Europe, and Japan.

In particular, the self-deployment of structures in space orbit is a core technology required for all space structures such aperture antennas for communication/images and solar panels.

Space launch vehicles having satellites or the like loaded therein have a limited fairing internal space and payload, and therefore the volume or weight of the load in the space launch vehicles is strictly restricted.

However, since most conventional deployable space structures are mechanically deployed, deployment mechanisms take up a relatively large proportion of the total weight of the space structures and the components of the deployment mechanisms sometimes account for more than 90% of the total weight of the space structures.

The conventional mechanical deployment causes problems relating to excessive weight, storage space security, etc., and excessive research and development costs are consumed to resolve these problems.

US 2010/282906 A1 describes a laminated wing structure that includes at least one layer of metal material and at least one layer of a shape memory polymer (SMP) material. The SMP is heated to a temperature in its glass transition band Tg to roll the wing around the air vehicle into a stored position. The metal layer(s) must be thin enough to remain below its yield point when rolled up. In preparation for launch, the SMP material is thermally activated allowing the strain energy stored in the layer of metal material to return the wing to its deployed position at launch. Once deployed, the SMP cools to its glassy state. The SMP material may be reinforced with fiber to form a polymer matrix composite (PMC). SMP may be used to provide shear strain relief for multiple metal layers.; By offloading the motive force required to return the wing to its original deployed position from the SMP to the metal, the polymer does not acquire a permanent set and the wing may be deployed accurately.

### SUMMARY OF THE INVENTION

An object of the present invention is to provide a lightweight structure using dual-matrix composite material, capable of having a freely deformable shape even while rigidity of the structure is kept high, by applying an epoxy resin to a fixed portion on a carbon fiber and applying a shape memory polymer (SMP) resin to a deformable portion on the carbon fiber.

This object is achieved by a reconfigurable structure according to claim 1.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In order to resolve the above-mentioned problems, the present invention can control shape deformation of a structure through temperature regulation using a shape memory polymer (SMP) resin, without including separate drive (deployment) and connection mechanisms for the shape deformation of the structure. Thus, it is possible to reduce the weight of the structure.

In particular, the present invention can freely deform the shape of the structure even while keeping the rigidity of the structure high to hold the accurate shape of the structure, by applying a typical epoxy resin to a fixed portion on a carbon fiber and applying the shape memory polymer resin to a deformable portion serving as a hinge on the carbon fiber.

In accordance with an aspect of the present invention, a reconfigurable structure using dual-matrix composite material includes a carbon fiber layer, an epoxy resin layer laminated on a portion of the carbon fiber layer, and a shape memory polymer (SMP) resin layer laminated on a portion of the carbon fiber layer. The epoxy resin layer is laminated on a fixed portion of the carbon fiber layer, and the shape memory polymer resin layer is laminated on a deformable portion of the carbon fiber layer. The fixed portion of the carbon fiber layer consists of a plurality of fixed portions and deformable portions arranged between the fixed portions, so that the reconfigurable structure has a foldable structure.

The carbon fiber layer may be made of a triaxially woven fabric (TWF) carbon fiber.

The epoxy resin layer and the shape memory polymer resin layer may be laminated on the carbon fiber layer through curing.

The shape memory polymer resin layer may have a flexible property at a glass transition temperature (Tg) or more, and may have an elastic restoring force for restoration to a memorized shape before deformation.

The fixed and deformable portions of the carbon fiber layer may form a consistent pattern so that the reconfigurable structure has a three-dimension shape-deformable structure.

The reconfigurable structure may further include a heat supply unit configured to supply heat to the shape memory polymer resin layer.

The reconfigurable structure may further include a control unit configured to control a temperature of the shape memory polymer resin layer to control shape deformation of the reconfigurable structure.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1A is a view illustrating a structure using dual-matrix composite material according to a first embodiment of the present invention;
Fig. 1B is a view illustrating a state in which the shape of the structure of Fig. 1A is deformed;
Fig. 2A is a view illustrating a structure using dual-matrix composite material according to a second embodiment of the present invention; and
Fig. 2B is a view illustrating a state in which the shape of the structure of Fig. 2A is deformed.

### DESCRIPTION OF SPECIFIC EMBODIMENTS

Exemplary embodiments of the present invention will be described below in detail with reference to the accompanying drawings.

In addition, the terms used in the specification are terms defined in consideration of functions of the present invention, and these terms may vary with the intention or practice of a user or an operator. Therefore, these terms should be defined based on the entire content disclosed herein. Meanwhile, the following embodiments are for the purpose of describing the components set forth in the appended claims only and are not intended to limit the scope of the invention.

In certain embodiments, the description irrelevant to the present invention will be omitted to avoid obscuring appreciation of the disclosure. Throughout the disclosure, like reference numerals refer to like parts throughout the various figures and embodiments of the present invention. In the entire description, it will be understood that when a component is referred to as being "comprising/including" any component, it does not exclude other components, but can further comprises/includes the other components unless otherwise specified.

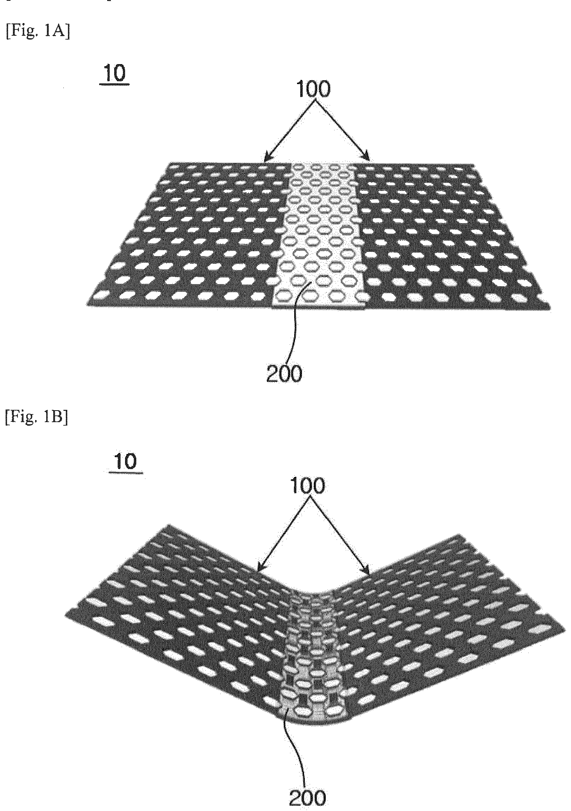

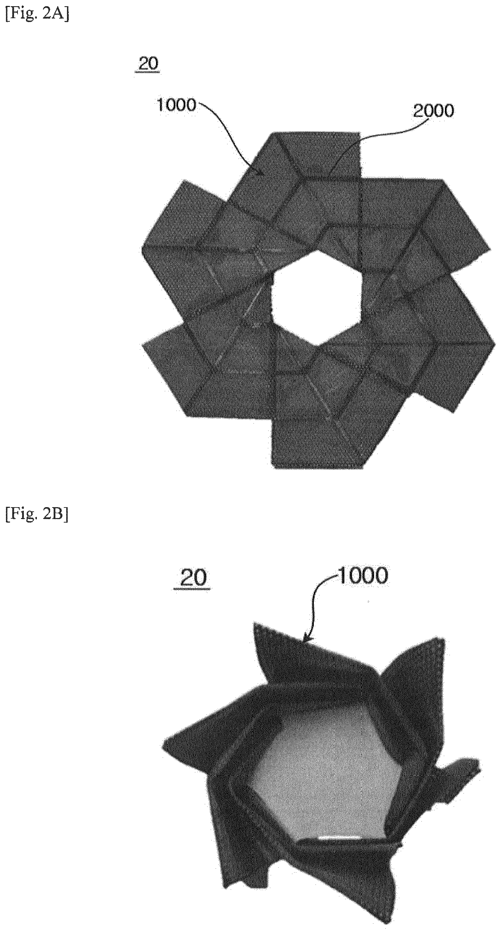

Fig. 1A is a view illustrating a structure using dual-matrix composite material according to a first embodiment of the present invention. Fig. 1B is a view illustrating a state in which the shape of the structure of Fig. 1A is deformed. Fig. 2A is a view illustrating a structure using dual-matrix composite material according to a second embodiment of the present invention. Fig. 2B is a view illustrating a state in which the shape of the structure of Fig. 2A is deformed.

The present invention can control the shape deformation of the structure through temperature regulation using a shape memory polymer (SMP) resin, without including separate drive (deployment) and connection mechanisms for the shape deformation of the structure. Thus, it is possible to reduce the weight of the structure.

First, a shape memory polymer (SMP) will be described.

The shape memory polymer is a polymer that memorizes an initial shape so as to return to an original shape from a deformed shape at a glass transition temperature (Tg) or more. The deformation of the shape memory polymer is restored through a mechanism in which entropy is changed from the elasticity of the shape memory polymer. The shape memory polymer has a molecular structure similar to a net network, and molecular chains to crosslink molecules and reversible molecules complexly exist in the shape memory polymer. The molecular chains are irreversible phases that may not return back once cured, and serve to obstruct free movement.

On the other hand, the reversible molecules are reversible phases that take up a large proportion of the shape memory polymer, and serve to elastically deform and restore the shape memory polymer. The reversible phases are changed to fluid phases at a certain temperature or more, thereby exhibiting a good flow. When an external force is applied to the shape memory polymer at the glass transition temperature or more, the molecular chains of the shape memory polymer are aligned, in which case entropy is reduced. In this case, when the shape memory polymer rapidly is rapidly cooled to the glass transition temperature or less, the unstable reversible phases are stable again to be maintained in a deformed form.

In addition, the shape memory polymer is heated again to the glass transition temperature or more, the molecular chains move by the stored strain energy, thereby returning to the original shapes.

The shape memory polymer has advantages in terms of large scalability, high elastic deformation (stress of 200% or more), low cost, low density, wide use temperature regulation, and easy processing. The shape memory polymer may use polynorbonene, polyester fiber, trans-isoprene, styrene-butadiene copolymer, a portion of polyurethane, etc., as the main material thereof.

Accordingly, the reconfigurable structure using dual-matrix composite material of the present invention using the shape memory polymer resin is applicable to various fields. Especially, the structure of the present invention is applicable to a deformable aircraft structure or a deployable large space structure (antenna, reflector, solar array, or the like) to contribute to a reduction in weight of the aircraft/space structure having deployment mechanisms. In addition, the structure of the present invention is applicable to a compact portable tent or a ground antenna.

In addition, the structure of the present invention is applicable as fundamental technology for development of extra-large/ultra-light space structures. Thus, the present invention can reduce the weight of the structure to about 1/100 of an existing space structure, and can reduce the development cost of the space structure below 1/10 of the existing space structure through storage efficiency of about 40 times that of the existing space structure and a reduction in launch cost.

Hereinafter, the reconfigurable structure using dual-matrix composite material according to the present invention will be described in detail.

The reconfigurable structure using dual-matrix composite material according to the present invention may include a carbon fiber layer, an epoxy resin layer that is laminated on a portion of the carbon fiber layer, and a shape memory polymer (SMP) resin layer that is laminated on a portion of the carbon fiber layer.

In this case, the epoxy resin layer may be laminated on a fixed portion of the carbon fiber layer, and the shape memory polymer resin layer may be laminated on a deformable portion of the carbon fiber layer.

That is, the present invention discloses a structure using dual-matrix composite material, in which a typical epoxy resin is applied to a structure portion (fixed portion) having the rigidity of a carbon fiber and a shape memory polymer resin is applied to a structure portion (deformable portion) serving as a flexible hinge.

In particular, it is possible to freely deform the shape of the structure even while keeping the rigidity of the structure high to hold the accurate shape of the structure, by applying the typical epoxy resin to the fixed portion on the carbon fiber and applying the shape memory polymer resin to the deformable portion serving as the hinge on the carbon fiber.

The carbon fiber layer may be made of a triaxially woven fabric (TWF) carbon fiber.

The epoxy resin layer and the shape memory polymer resin layer may be laminated on the carbon fiber layer through curing.

For example, after a carbon fiber is laminated on a mold and a shape memory polymer is poured thereon so that the entirety of the fiber is impregnated with the shape memory polymer, it is possible to cure them in an oven in a state in which vacuum pressure is maintained.

Therefore, although the epoxy resin layer or the shape memory polymer resin layer are described to be laminated on the carbon fiber layer in the present invention, the carbon fiber layer and the epoxy resin layer or shape memory polymer resin layer are not limited to be distinctly different layers. For example, the structure according to the present invention may also include a carbon fiber layer impregnated with an epoxy resin layer or shape memory polymer resin layer.

The shape memory polymer resin layer has a flexible property at the glass transition temperature (Tg) or more, and has an elastic restoring force for restoration to the memorized shape before deformation.

Thus, the shape of the structure including the shape memory polymer resin layer may be easily deformed at a specific temperature (Tg) or more, and may also be restored to the shape before deformation using a shape memory effect.

The shape memory polymer resin has a flexible property at the glass transition temperature (Tg) or more. Therefore, when the shape memory polymer resin layer is cured in the deformable portion serving as the hinge on the carbon fiber layer, the structure may be significantly deformed, for example to be folded by 180 degrees, without damage due to micro-buckling of the carbon fiber.

Accordingly, the structure may have a three-dimensional structure by forming a consistent pattern in the fixed portion and deformable portion on the carbon fiber layer.

For example, the structure may preferably have a foldable structure in which the fixed portion of the carbon fiber layer consists of a plurality of fixed portions and deformable portions are arranged between the fixed portions.

The detailed description thereof will be given below.

### [First Embodiment]

First, a structure using dual-matrix composite material 10 according to a first embodiment of the present invention will be described with reference to Figs. 1A and 1B.

The structure using dual-matrix composite material 10 according to the first embodiment of the present invention includes a carbon fiber layer, an epoxy resin layer 100 that is laminated on a portion of the carbon fiber layer, and a shape memory polymer (SMP) resin layer 200 that is laminated on a portion of the carbon fiber layer. The epoxy resin layer 100 is laminated on a fixed portion of the carbon fiber layer, and the shape memory polymer resin layer 200 is laminated on a deformable portion of the carbon fiber layer.

In this case, as illustrated in Fig. 1A, the epoxy resin layer 100 is divided into both layers that are laminated on the carbon fiber layer, and the shape memory polymer resin layer 200 is elongated therebetween.

Thus, the structure 10 may have a foldable structure in which the laminated portion of the shape memory polymer resin layer 200, i.e. the deformable portion is deformed according to the temperature thereof in a state in which the laminated portions of the epoxy resin layers 100, i.e. the fixed portions are not deformed, so that the fixed portions face each other.

In detail, when the temperature of the shape memory polymer resin layer 200 is increased to a glass transition temperature (Tg) or more, the fixed portions may be folded to face each other, as illustrated in Fig. 1B, in which case when the temperature of the shape memory polymer resin layer 200 is decreased in this state, the shape of the structure may be maintained in a fixed state. In this case, an external force may be applied to the structure for folding thereof. In addition, when the temperature of the shape memory polymer resin layer 200 is increased to the glass transition temperature (Tg) or more, the shape of the structure may be restored to be deployed by elastic restoring force, as illustrated in Fig. 1A.

### [Second Embodiment]

Next, a structure using dual-matrix composite material 20 according to a second embodiment of the present invention will be described with reference to Figs. 2A and 2B.

The structure using dual-matrix composite material 20 according to the second embodiment of the present invention includes a carbon fiber layer, an epoxy resin layer 1000 that is laminated on a portion of the carbon fiber layer, and a shape memory polymer (SMP) resin layer 2000 that is laminated on a portion of the carbon fiber layer. The epoxy resin layer 1000 is laminated on a fixed portion of the carbon fiber layer, and the shape memory polymer resin layer 2000 is laminated on a deformable portion of the carbon fiber layer.

In this case, as illustrated in Fig. 2A, the fixed portion of the carbon fiber layer, on which the epoxy resin layer 1000 is laminated, consists of six fixed portions that are arranged in sequence in a circular form, and the deformable portion of the carbon fiber layer, on which the shape memory polymer resin layer 2000 is laminated, is formed in a connection portion into each of the fixed portions such that the fixed portion is foldable.

Thus, the structure 20 may have an entirely rolled structure in which the laminated portion of the shape memory polymer resin layer 2000, i.e. the deformable portion is deformed according to the temperature thereof in a state in which the laminated portions of the epoxy resin layers 1000, i.e. the fixed portions are not deformed, so that each of the fixed portions is folded, as illustrated in Figs. 2B.

In detail, when the temperature of the shape memory polymer resin layer 2000 is increased to a glass transition temperature (Tg) or more, each of the fixed portions may be folded so that the structure is entirely rolled, as illustrated in Fig. 2B, in which case when the temperature of the shape memory polymer resin layer 2000 is decreased in this state, the shape of the structure may be maintained in a fixed state. In this case, an external force may be applied to the structure for folding thereof. In addition, when the temperature of the shape memory polymer resin layer 2000 is increased to the glass transition temperature (Tg) or more, the shape of the structure may be restored to be deployed by elastic restoring force, as illustrated in Fig. 2A.

The structure in the present embodiment may be complicated compared to that in the first embodiment, but it has an advantage in that the shape thereof is deformable such that the volume of the structure is significantly reduced in a deployed state.

The present invention is not limited to the above embodiments, and it is of course possible to manufacture a three-dimensional structure in various manners such that the shape thereof is deformable by forming a consistent pattern in the fixed and deformable (hinge) portions of the carbon fiber layer.

In addition, the structure according to the present invention may further include a heat supply unit (not shown) that supplies heat to the shape memory polymer resin layer.

The heat supply unit serves to supply predetermined heat to the shape memory polymer resin layer, and may include a hot wire that is in contact with the shape memory polymer resin layer, and a power source that is electrically connected to the hot wire, for supply of heat to the shape memory polymer resin layer.

In addition, the heat supply unit may consist of a carbon nanotube particle included in the shape memory polymer resin layer to increase the temperature of the shape memory polymer resin layer by microwaves provided from the outside.

Since heat is supplied to the shape memory polymer resin layer by the heat supply unit, the shape of the structure may be deformed or restored.

In addition, the structure according to the present invention may further include a control unit (not shown) that controls the temperature of the shape memory polymer resin layer to control the shape deformation of the structure.

The control unit is connected to the heat supply unit to control the heat supplied to the shape memory polymer resin layer by the heat supply unit, and may control the temperature of the shape memory polymer resin layer. Thus, it is possible to ultimately control the shape deformation of the structure.

For example, the present invention is applied to an aircraft wing, it is necessary to deform the shape of the aircraft wing according to aircraft takeoff, aircraft landing, or various flight conditions such as weather conditions. Thus, the control unit may control the temperature of the shape memory polymer resin layer to be increased to the glass transition temperature or more for shape deformation when it is necessary to fold the wing, and may control the temperature of the shape memory polymer resin layer to be decreased in order to maintain this state. In addition, the control unit may control the temperature of the shape memory polymer resin layer to be increased in order to restore the wing to a deployed state.

As is apparent from the above description, in accordance with a reconfigurable structure using dual-matrix composite material of the present invention, it is possible to control shape deformation of a structure through temperature regulation using a shape memory polymer (SMP) resin, without including separate drive (deployment) and connection mechanisms for the shape deformation of the structure. Thus, it is possible to reduce the weight of the structure.

In particular, it is possible to freely deform the shape of the structure even while keeping the rigidity of the structure high to hold the accurate shape of the structure, by applying a typical epoxy resin to a fixed portion on a carbon fiber and applying the shape memory polymer resin to a deformable portion serving as a hinge on the carbon fiber.

Accordingly, it is possible to manufacture a three-dimensional structure, the shape of which is largely and freely deformable, without damage due to micro-buckling of the carbon fiber, by forming a consistent pattern in the fixed portion and deformable (hinge) portion on the carbon fiber.

## Claims

1. A reconfigurable structure using dual-matrix composite material, comprising:
a carbon fiber layer;
an epoxy resin layer (100, 1000) laminated on a portion of the carbon fiber layer; and
a shape memory polymer (SMP) resin layer (200, 2000),
**characterized in that**
the epoxy resin layer (100, 1000) is laminated on a fixed portion of the carbon fiber layer,
the shape memory polymer resin layer (200, 2000) is laminated on a deformable portion of the carbon fiber layer, and
the fixed portion of the carbon fiber layer consists of a plurality of fixed portions with a deformable portion arranged between the fixed portions, so that the reconfigurable structure has a foldable structure.

2. The reconfigurable structure according to claim 1, wherein the carbon fiber layer is made of a triaxially woven fabric (TWF) carbon fiber.

3. The reconfigurable structure according to claim 1 or 2, wherein the epoxy resin layer (100, 1000) and the shape memory polymer resin layer (200, 2000) are laminated on the carbon fiber layer through curing.

4. The reconfigurable structure according to any one of claims 1 to 3, wherein the shape memory polymer resin layer (200, 2000) has a flexible property at a glass transition temperature (Tg) or more, and has an elastic restoring force for restoration to a memorized shape before deformation.

5. The reconfigurable structure according to claim 1, wherein the fixed and deformable portions of the carbon fiber layer form a consistent pattern so that the reconfigurable structure has a three-dimension shape-deformable structure.

6. The reconfigurable structure according to any one of claims 1 to 5, further comprising a heat supply unit configured to supply heat to the shape memory polymer resin layer (200, 2000).

7. The reconfigurable structure according to any one of claims 1 to 6, further comprising a control unit configured to control a temperature of the shape memory polymer resin layer (200, 2000) to control shape deformation of the reconfigurable structure.

## Patentansprüche

1. Eine rekonfigurierbare Struktur unter Verwendung eines zusammengesetzten Dual-Matrix-Materials, die folgende Merkmale aufweist:
eine Kohlenstofffaserschicht;
eine Epoxidharzschicht (100, 1000), die auf einen Abschnitt der Kohlenstofffaserschicht laminiert ist; und
eine Formgedächtnispolymer(SMP)-Harzschicht (200, 2000),
**dadurch gekennzeichnet, dass**
die Epoxidharzschicht (100, 1000) auf einen festen Abschnitt der Kohlenstofffaserschicht laminiert ist,
die Formgedächtnispolymer-Harzschicht (200, 2000) auf einen verformbaren Abschnitt der Kohlenstofffaserschicht laminiert ist und
der feste Abschnitt der Kohlenstofffaserschicht aus einer Mehrzahl fester Abschnitte besteht, wobei ein verformbarer Abschnitt zwischen den festen Abschnitten angeordnet ist, so dass die rekonfigurierbare Struktur eine faltbare Struktur aufweist.

2. Die rekonfigurierbare Struktur gemäß Anspruch 1, bei der die Kohlenstofffaserschicht aus einer Kohlenstofffaser aus einem triaxial gewebten Gewebe (TWF) hergestellt ist.

3. Die rekonfigurierbare Struktur gemäß Anspruch 1 oder 2, bei der die Epoxidharzschicht (100, 1000) und die Formgedächtnispolymer-Harzschicht (200, 2000) durch Aushärten auf die Kohlenstofffaserschicht laminiert sind.

4. Die rekonfigurierbare Struktur gemäß einem der Ansprüche 1 bis 3, bei der die Formgedächtnispolymer-Harzschicht (200, 2000) bei einer Glasübergangstemperatur (Tg) oder mehr eine flexible Eigenschaft aufweist und eine elastische Wiederherstellkraft für eine Wiederherstellung zu einer gemerkten Form vor der Verformung aufweist.

5. Die rekonfigurierbare Struktur gemäß Anspruch 1, bei der die festen und die verformbaren Abschnitte der Kohlenstofffaserschicht eine konsistente Struktur ausbilden, so dass die rekonfigurierbare Struktur eine in der Dreidimensionalform verformbare Struktur aufweist.

6. Die rekonfigurierbare Struktur gemäß einem der Ansprüche 1 bis 5, die ferner eine Wärmezuführeinheit aufweist, die dazu ausgebildet ist, der Formgedächtnispolymer-Harzschicht (200, 2000) Wärme zuzuführen.

7. Die rekonfigurierbare Struktur gemäß einem der Ansprüche 1 bis 6, die ferner eine Steuereinheit aufweist, die dazu ausgebildet ist, eine Temperatur der Formgedächtnispolymer-Harzschicht (200, 2000) zu steuern, um eine Formverformung der rekonfigurierbaren Struktur zu steuern.

## Revendications

1. Structure reconfigurable utilisant un matériau composite à double matrice, comprenant:
une couche de fibre de carbone;
une couche de résine époxyde (100, 1000) laminée sur une partie de la couche de fibre de carbone; et
une couche de résine polymère à mémoire de forme (SMP) (200, 2000),
**caractérisée par le fait que**
la couche de résine époxyde (100, 1000) est stratifiée sur une partie fixe de la couche de fibre de carbone,
la couche de résine polymère à mémoire de forme (200, 2000) est stratifiée sur une partie déformable de la couche de fibre de carbone, et
la partie fixe de la couche de fibre de carbone est constituée d'une pluralité de parties fixes avec une partie déformable disposée entre les parties fixes, de sorte que la structure reconfigurable présente une structure pliable.

2. Structure reconfigurable selon la revendication 1, dans laquelle la couche de fibre de carbone est réalisée en fibre de carbone en forme de tissu tissé de manière triaxiale (TWF).

3. Structure reconfigurable selon la revendication 1 ou 2, dans laquelle la couche de résine époxyde (100, 1000) et la couche de résine polymère à mémoire de forme (200, 2000) sont stratifiées sur la couche de fibre de carbone par durcissement.

4. Structure reconfigurable selon l'une quelconque des revendications 1 à 3, dans laquelle la couche de résine polymère à mémoire de forme (200, 2000) présente une propriété flexible à une température de transition vitreuse (Tg) ou plus, et présente une force de restauration élastique pour la restauration à une forme mémorisée avant la déformation.

5. Structure reconfigurable selon l'une quelconque des revendications précédentes, dans laquelle les parties fixes et déformables de la couche de fibre de carbone forment un modèle cohérent de sorte que la structure reconfigurable présente une structure de forme déformable tridimensionnelle.

6. Structure reconfigurable selon l'une quelconque des revendications 1 à 5, comprenant par ailleurs une unité d'alimentation de chaleur configurée pour alimenter de la chaleur à la couche de résine polymère à mémoire de forme (200, 2000).

7. Structure reconfigurable selon l'une quelconque des revendications 1 à 6, comprenant par ailleurs une unité de régulation configurée destinée à réguler une température de la couche de résine polymère à mémoire de forme (200, 2000) pour réguler la déformation de forme de la structure reconfigurable.
